Europäisches Patentamt

European Patent Office

Office européen des brevets

(11) Veröffentlichungsnummer: **0 199 279**
**A2**

(12) **EUROPÄISCHE PATENTANMELDUNG**

(21) Anmeldenummer: **86105267.8**

(22) Anmeldetag: **16.04.86**

(51) Int. Cl.⁴: **B 23 K 26/00**
**B 23 K 31/02, B 21 D 51/26**
**B 65 D 6/32**

(30) Priorität: **22.04.85 DE 3514519**

(43) Veröffentlichungstag der Anmeldung:
**29.10.86 Patentblatt 86/44**

(84) Benannte Vertragsstaaten:
**AT BE CH DE FR GB IT LI LU NL SE**

(71) Anmelder: **Karl Huber Verpackungswerke GmbH + Co.**
**Hohenlohestrasse 2**
**D-7110 Öhringen(DE)**

(72) Erfinder: **Kögel, Hermann**
**Rotdornweg 4**
**D-7110 Öhringen(DE)**

(74) Vertreter: **Flügel, Otto, Dipl.-Ing. et al,**
**Dipl.-Ing. Otto Flügel Dipl.-Ing. Manfred Säger**
**Patentanwälte Cosimastrasse 81 Postfach 810 540**
**D-8000 München 81(DE)**

(54) **Verfahren zum Herstellen eines Falzrandes.**

(57) Das Verfahren dient zum Herstellen eines Falzrandes zwischen dem Rumpf eines Behälters und dessen Boden und/oder Oberboden aus Fein- und/oder Feinstblech, wobei an dem zumindest fast fertiggefalzten Falzrand zumindest zwei von dessen Schichten mittels Schmelzschweißen zumindest stellenweise verbunden werden.

Fig.1

Croydon Printing Company Ltd.

Die Erfindung betrifft ein Verfahren zum Herstellen eines Falzrandes gemäß dem Oberbegriff des Hauptanspruchs.

Bei Behältern aus Fein- und Feinstblech, beispielsweise Farbdosen oder dergleichen, wird der Rumpf vornehmlich durch eine Schweißverbindung an der Längsnaht hergestellt; ansonsten wird der Boden oder Oberboden unter Bildung eines Falzrandes aufgefalzt, und zwar in der Regel unter Zwischeneinlage einer Dichtung.

Bei solchen Behältern muß die Dichtheit unter allen Umständen, unter Vakuum und Druckbelastung gewährleistet sein, insbesondere beim Transport gefährlicher Güter. Daher wird im allgemeinen ein komplizierter Falzrand, zumindest als Doppelfalz, teilweise auch als Dreifachfalz gebildet. Mit abnehmender Blechdicke reduziert sich aber sowohl der Verformungsgrad als auch die mechanische Festigkeit der geformten Falzränder, so daß schon ein Fall des gefüllten Behältnisses aus geringer Höhe das Aufbiegen des Falzes an dieser Stelle mit sich bringt, wodurch die Dichtheit des Behälters nicht mehr mit hinreichender Zuverlässigkeit sichergestellt ist, was insbesondere beim Befüllen mit gefährlichen Gütern nicht hinnehmbar ist.

Zur Behebung dieses Mangels liegt es nahe, das Blech dicker zu wählen, was den Behälter nicht nur verteuern würde, er wird auch in erheblichem Maße schwerer.

Der Erfindung liegt die Aufgabe zugrunde, ein gattungsgemäßes Verfahren zu schaffen, mit dem die Behälter ohne Erhöhung der Blechdicke dauerhaft zuverlässig und auch bei mechanischen Beanspruchungen sicher abgedichtet werden können.

Diese Aufgabe wird bei einem gattungsgemäßen Verfahren gemäß dem Oberbegriff des Hauptanspruches erfindungsgemäß durch dessen kennzeichnende Merkmale in überraschend einfacher Weise gelöst.

Erfindungsgemäß wird ein einfacher Falzrand gebildet, der schon bei nur stellenweiser Verbindung durch das Schweißen eine erhebliche Vergrößerung seiner mechanischen Festigkeit aufweist; ein Aufbiegen des Falzrandes bei mechanischer Stoßbelastung wird zuverlässig verhindert. Insbesondere bei Durchführung der Schmelzschweißung mittels eines Lasers kann die Naht genau placiert und die Intensität so eingestellt werden, daß die gewünschte Anzahl von Schichten des Falzrandes miteinander verschweißt werden. Außerdem ist von Vorteil, daß sich nur eine sehr schmale Schweißstelle ergibt, so daß von außen der Falzrand optisch ansprechend ist und nicht nachbearbeitet werden muß.

In besonders bevorzugter Ausführung der Erfindung findet das Schweißen am fertig gefalzten Falzrand statt. Wiederum bevorzugt wird die Schweißung über den gesamten Falzbereich, also mit in sich geschlossener Naht, ausgeführt. Dadurch wird die Fallhöhe, die der Behälter ohne Schaden zu nehmen abstürzen kann, erheblich vergrößert. Der Falz wird absolut dicht, ohne daß es einer irgendwie gearteten besonderen Dichtungseinlage bedarf.

Weitere Ausführungen der Erfindung ergeben sich aus den Unteransprüchen. Das erfindungsgemäße Verfahren zur Herstellung eines neuen Behälters wird nachfolgend unter Bezugnahme auf die Zeichnung näher erläutert. In dieser zeigt:

Figur 1    den fast fertiggestellten Falzrand eines Behälters im teilweise abgebrochenen, schematischen Querschnitt;

Figur 2    den Falzrand gemäß Figur 1 im fertig gefalzten Zustand;

Figur 3      eine zweite Ausführungsform eines Falzrandes;

Figur 4      eine dritte Ausführungsform eines Falzrandes
             und

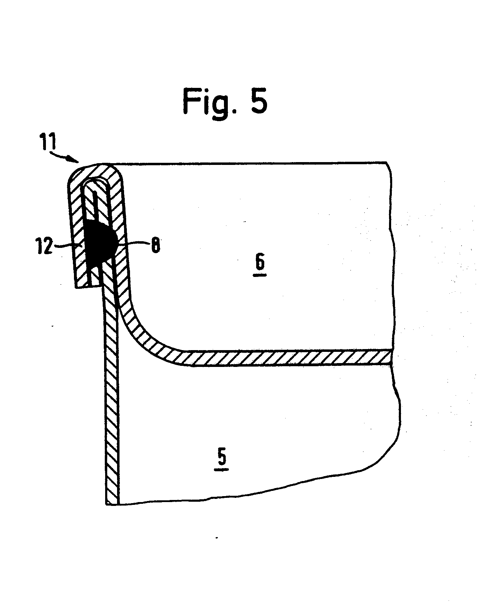

Figur 5      eine vierte Ausführungsform eines Falzrandes.

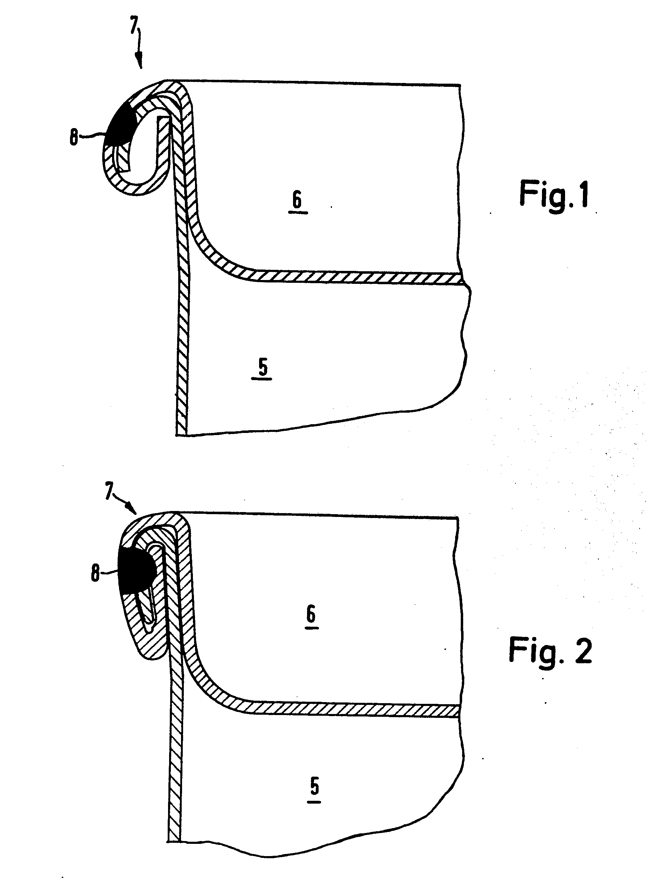

Figur 1 zeigt den mit 5 bezeichneten Rumpf eines Behälters
und dessen Oberboden 6, die unter Bildung eines fünfschichtigen Falzrandes 7 miteinander verbunden werden sollen. Der
Falzrand ist hierbei nur teilweise hergestellt und - von
außen - eine Schmelzschweißung  in Form der Schweißlinie 8
angebracht, die zwei Schichten des Falzrandes 7 miteinander verbindet. Figur 2 zeigt den fertig hergestellten Falzrand 7.

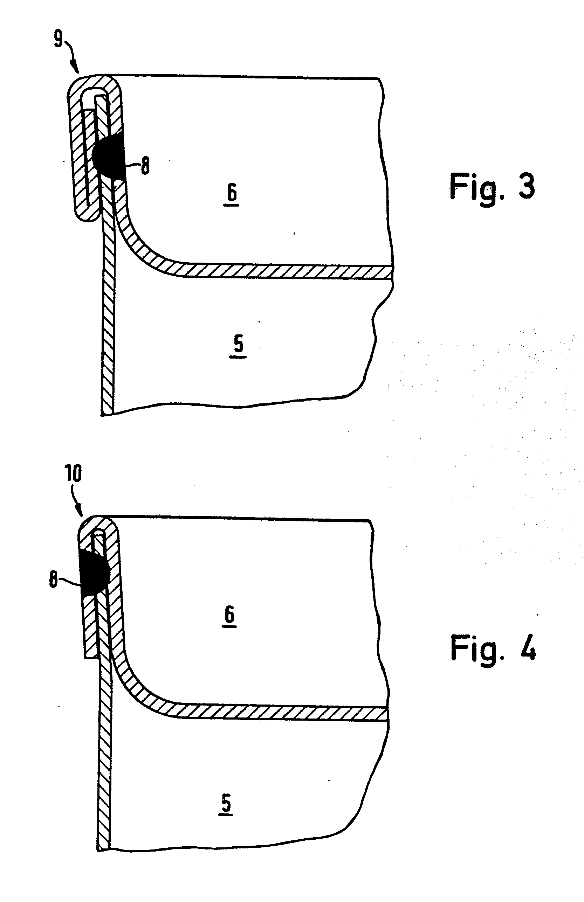

Die zweite, in Figur 3 dargestellte Ausführungsform weist
einen vierschichtigen Falzrand 9 mit einer von innen angebrachten Schweißung 8 an dem fertig gefalzten Falzrand 9
auf.

Als dritte Ausführungsform für einen nach dem erfindungsgemäßen Verfahren hergestellten Behälter zeigt Figur 4 einen dreischichtigen Falzrand 10, bei dem die Schweißung
von außen angebracht ist und alle drei Schichten umfaßt.

Als vierte Ausführungsform ist ein Behälter gezeigt (Fig.
5), bei dem der Falzrand 11 zunächst nicht fertiggefalzt
ist. Die - gezeichnete - äußere Schicht 12 des Oberbodens
6 ist noch nicht fertig nach unten gefalzt. In diesem -
nicht gezeigten - Zustand wird die Schweißung 8 ausgeführt,
und hierbei die drei Schichten miteinander verschweißt,
nämlich der Rumpf 5 mit seinem nach außen umgefalzten
Außenrand mit dem Oberboden 6. Erst danach wird die Schicht
12 über die Schweißung 8 umgefalzt, so daß die Schweißnaht
8 abgedeckt ist. Ein Nacharbeiten ist nicht erforderlich,
weil die Schweißnaht von außen nicht sichtbar ist.

Karl Huber Verpackungswerke
GmbH & Co.
Hohenlohestraße 2
7110 Öhringen

12.734/sä/hi

---

**VERFAHREN ZUM HERSTELLEN EINES FALZRANDES**

---

PATENTANSPRÜCHE

1. Verfahren zum Herstellen eines Falzrandes zwischen dem Rumpf eines Behälters und dessen Boden und/oder Oberboden aus Fein- und/oder Feinstblech, d a durch gekennzeichnet, daß an dem zumindest fast fertig gefalzten Falzrand zumindest zwei von dessen Schichten mittels Schmelzschweißen miteinander zumindest stellenweise verbunden werden.

2. Verfahren nach Anspruch 1, d a d u r c h g e kennzeichnet, daß an dem fertig hergestellten Falzrand geschweißt wird.

3. Verfahren nach Anspruch 1 oder 2, d a d u r c h gekennzeichnet, daß der Falzrand umlaufend ununterbrochen geschweißt wird.

4. Verfahren nach einem der Ansprüche 1 bis 3, d a durch gekennzeichnet, daß drei Schichten miteinander verschweißt werden.

5. Verfahren nach einem der Ansprüche 1 bis 4, d a durch gekennzeichnet, daß das Schmelzschweißen mittels eines Laserstrahls erfolgt.

Karl Huber Verpackungswerke
GmbH & Co.
Hohenlohestraße 2
7110 Öhringen

6.  Verfahren nach Anspruch 5, d a d u r c h   g e -
    k e n n z e i c h n e t,  daß der Laserstrahl im
    Winkelbereich von lotrecht bis waagrecht radial
    nach innen oder außen auf den Falzrand gerichtet
    wird.

7.  Verfahren nach einem der Ansprüche 1 bis 6,  d a -
    d u r c h   g e k e n n z e i c h n e t,  daß der
    Falzrand fast fertiggefalzt, danach der Laserstrahl
    radial von außen nach innen auf den fast fertiggefalzten Falzrand gerichtet und von diesem zumindest
    zwei Schichten miteinander verschweißt werden und
    daß dann der Falzrand fertiggefalzt wird, indem  er
    oder zumindest eine seiner Schichten die Schweißnaht
    überdeckend gefalzt wird.

8.  Vorrichtung nach Anspruch 6 oder 7,  d a d u r c h
    g e k e n n z e i c h n e t,  daß der Laserstrahl auf
    den Rumpf des Behälters gerichtet und danach eine
    Schicht des Bodens oder Oberbodens die Schweißnaht
    überdeckend gefalzt wird.

Fig.1

Fig. 2

2/3

0199279

9

8

6

5

Fig. 3

10

8

6

5

Fig. 4

## Fig. 5